(19)

Europäisches
Patentamt

European
Patent Office

Office européen
des brevets

(11) **EP 4 205 032 B1**

(12) **EUROPEAN PATENT SPECIFICATION**

(45) Date of publication and mention
of the grant of the patent:
**25.06.2025   Bulletin 2025/26**

(21) Application number: **21786604.5**

(22) Date of filing: **31.08.2021**

(51) International Patent Classification (IPC):
**G06M 11/00** $^{(2006.01)}$     **F03D 7/00** $^{(2006.01)}$

(52) Cooperative Patent Classification (CPC):
**G06M 11/00; F03D 80/55**

(86) International application number:
**PCT/IT2021/050269**

(87) International publication number:
**WO 2022/044058 (03.03.2022 Gazette 2022/09)**

(54) **METHOD FOR ESTIMATING THE ACCUMULATED MASS OF SOLID MICROPARTICLES ON A SURFACE**

VERFAHREN ZUR SCHÄTZUNG DER ANGESAMMELTEN MASSE FESTER MIKROPARTIKEL AUF EINER OBERFLÄCHE

PROCÉDÉ D'ESTIMATION DE LA MASSE ACCUMULÉE DE MICROPARTICULES SOLIDES SUR UNE SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.08.2020  IT 202000020758**

(43) Date of publication of application:
**05.07.2023   Bulletin 2023/27**

(73) Proprietors:
• **Vulpio, Alessandro**
  **70022 Altamura (BA) (IT)**
• **Suman, Alessio**
  **37041 Albaredo d'Adige (VR) (IT)**
• **Pinelli, Michele**
  **40125 Bologna (IT)**
• **Casari, Nicola**
  **46028 Sermide (MN) (IT)**

(72) Inventors:
• **Vulpio, Alessandro**
  **70022 Altamura (BA) (IT)**
• **Suman, Alessio**
  **37041 Albaredo d'Adige (VR) (IT)**

• **Pinelli, Michele**
  **40125 Bologna (IT)**
• **Casari, Nicola**
  **46028 Sermide (MN) (IT)**

(74) Representative: **Manzella & Associati**
  **Via dell'Indipendenza, 13**
  **40121 Bologna (IT)**

(56) References cited:
  **EP-A1- 3 139 038**

• **ANONYMOUS: "Logistic function - Wikipedia",
  19 November 2013 (2013-11-19), XP055631711,
  Retrieved from the Internet <URL:https://en.
  wikipedia.org/w/index.php?
  title=Logistic_function&oldid=582316576>
  [retrieved on 20191014]**
• **ZHI WANG ET AL: "Numerical study of
  heterogeneous condensation flow", MATERIALS
  FOR RENEWABLE ENERGY&ENVIRONMENT
  (ICMREE), 2011 INTERNATIONAL CONFERENCE
  ON, IEEE, 20 May 2011 (2011-05-20), pages 1983 -
  1987, XP031950488, ISBN: 978-1-61284-749-8,
  DOI: 10.1109/ICMREE.2011.5930727**

## Description

### Technical field

The present invention relates to a method for estimating the accumulated mass of solid microparticles on a surface, wherein the surface is subjected to a flow of a fluid comprising the microparticles.

### Background art

In many technical fields it often happens that a surface is subjected to a flow of a fluid, which can be a gas or a liquid, comprising solid microparticles, and those solid microparticles adhere to the surface with a consequent deposit of a layer of microparticles on the surface.

For instance, the gas turbines utilized in the aerospace field and, in general, in the field of air transport for propelling an aircraft, are generally subjected to a contamination by solid microparticles during the different operational phases of take-off, cruise and landing. More specifically, the microparticles may deposit on the surfaces of the blades of each turbine, or on additional aerodynamic surfaces of the turbine, modifying their shape and surface roughness. This entails a reduction of the efficiency of the aircraft, with a consequent increase of fuel consumption.

A further example is given by the adhesion of microparticles on the surface of photovoltaic panels. The deposit of the microparticles on the transparent surfaces of the photovoltaic panel reduces the quantity of usable radiation, considering a given radiation condition, and therefore causes a decrease of the productivity of each panel.

In the field of electronics, the deposit of solid microparticles on the electronic components may cause a modification of the ability of dissipating heat or may entail a worsening of the transmission or of the reception of signals of different typology.

Therefore, in many technical fields, the need is felt of being able to predict the accumulation of microparticles on a surface of an object, with the aim of planning more carefully the cleaning and maintenance operations of the surface subject to such a phenomenon. The object may be, for instance, a vehicle, a device or an apparatus or a part thereof, as previously stated.

Moreover, one must consider that the need of predicting the accumulation of microparticles on a surface of an object may also relate to the need of predicting how the performance of the object changes over time because of the mass accumulated on the surface.

Patent application EP 3 139 038 A1 discloses a computer implemented method which enables to estimate the surface condition of a rotatable blade of a turbine subject to a flow of a fluid. The method comprises measuring the deformations of the blade, which depend on the applied loads, and deriving information on the condition of the surface to create aerodynamic maps, which correlate the loads with the operative conditions of the blade. Finally, the method comprises estimating the condition of the surface of the blade by comparing the effective loads with the created maps.

The method previously described is laborious and difficult to implement, therefore the need is felt of devising a method which enables to estimate in a simple way the accumulation of microparticles on a surface.

### Disclosure

The object of the present invention is that of solving the above mentioned problems, by devising a method which enables to estimate the accumulated mass of microparticles on a surface, wherein the surface is subjected to a flow of a fluid comprising the solid microparticles.

Within this aim, a further object of the present invention is that of providing a method for estimating the mass of solid microparticles accumulated on a surface which is easy to carry out.

A further object of the present invention is that of providing a method for estimating the mass of solid microparticles accumulated on a surface which is versatile, so that it can be carried out in many different operative conditions.

A further object of the present invention is that of providing a method which enables to study the phenomenon of the deposition of solid microparticles on a surface subjected to a flow of a fluid comprising such microparticles.

The above mentioned purposes are achieved, according to the present invention, by a computer-implemented method for estimating the accumulated mass of solid microparticles on a surface subjected to a flow of a fluid comprising the microparticles according to claim 1.

The method according to the present invention for estimating the accumulated mass of solid microparticles on a surface, wherein the surface is subjected to a flow a fluid comprising said solid microparticles, is implemented through a computer.

The method comprises describing the variation of the accumulated mass of the solid microparticles on said surface over time with a model defined according to the following first differential equation:

$$\frac{dN(t)}{dt} = r\, N(t)\left(1 - \frac{N(t)}{K}\right)$$

N (t) is the mass of the solid microparticles accumulated on the surface at an instant of time (t).

r is a growth factor.

K is a maximum limit value of the mass of the solid microparticles accumulated on the surface.

The method comprises deriving a value of the coefficient r and deriving a value of the coefficient K.

The method comprises, subsequently, determining a curve of the variation of the accumulated mass of said microparticles on said surface as a function of time by applying said differential equation.

According to an aspect of the invention, the computer implemented method for estimating the accumulated mass of solid microparticles on a surface, wherein said surface is subjected to a flow a fluid comprising said solid microparticles, comprises describing the variation of the accumulated mass of the solid microparticles on said surface over time with a model defined according to the following second differential equation:

$$\frac{dN(t)}{dt} = r\, N(t)\left(1 - \frac{N(t)}{K}\right) - \varepsilon\, N(t)P(t;\,\lambda)$$

N (t) is the mass of the solid microparticles accumulated on the surface at an instant of time (t).

r is a growth factor.

K is a maximum limit value of the mass of the solid microparticles accumulated on the surface.

$\varepsilon$ is the share of the mass of the solid microparticles detached from said surface.

Preferably $\varepsilon$ has a value in the range between 0 and 1.

$\lambda$ indicates the average number of detachment events of the mass of the solid microparticles in a predetermined time interval.

P (t, $\lambda$) is Poisson probability distribution which a phenomenon of detachment of said mass of microparticles from said surface has to happen in said predetermined time interval.

The method comprises deriving a value of said coefficient r and deriving a value of said coefficient K.

The method also comprises deriving a value of $\lambda$ and deriving a value of $\varepsilon$.

The method comprises, moreover, determining a curve of the variation of the accumulated mass of said microparticles on said surface as a function of time by applying said differential equation.

The method for describing the variation of the mass according to said second differential equation takes into consideration the phenomenon of macro-detachment, which is an event that reduces the accumulated mass of microparticles on the surface and is modeled through a random fluctuation value, which is the following: $\varepsilon\, N(t)P(t;\,\lambda)$.

It is to observe that the method according to the present invention enables to make an estimate of the mass of solid microparticles accumulated on a surface over time. In particular, the method is based on a statistical model which enables to predict the accumulation of solid microparticles on a surface over time and it is advantageous with respect to a model based on interpolation of experimental data derived from experimental tests which aim to simulate the real conditions, because it is a generic model.

The method according to the present invention is easy to carry out because it is sufficient to establish the values of the coefficients and to derive the curve of the variation of the accumulated mass over time.

It is to observe that the method can be carried out in any situation in which a surface is subjected to a flow comprising solid microparticles, given that the conditions for carrying out the method, such as for instance the flow or microparticles or surface characteristics, are taken into consideration through the choice of the coefficients of the differential equation that describes the model on which the method is based. Therefore, the method turns out to be versatile.

Another advantage of the method is that it enables to study the phenomenon of deposition of microparticles on a surface, and therefore it can be useful in the design or test of a device, of an apparatus or of a plant.

Preferably, r and K are coefficients related to predetermined characteristics of said flow of a fluid comprising said solid microparticles.

Preferably, r and K are coefficients related to predetermined characteristics of said surface.

Preferably, r and K are coefficients related to predetermined characteristics of said solid microparticles.

Preferably, said characteristics of said flow comprise the average value of the impact angle of said solid microparticles on said surface and the average value of the impact speed of said solid microparticles on said surface.

Preferably said characteristics of said solid microparticles comprise the concentration of said solid microparticles in said flow of said fluid.

Preferably said characteristics of said solid microparticles comprise the diameter of the distribution of said microparticles in said flow.

Preferably said characteristics of said solid microparticles comprise the density of the material the solid microparticles are made of.

Preferably said characteristics of said surface comprise the surface roughness.

According to an advantageous aspect of the invention, the method step of deriving the values of r, K, λ e ε comprises selecting the values of r, K, λ e ε from a memory of said computer.

Preferably, the selection of the values of r, K, λ e ε is carried out on the basis of the average value of the impact speed of said solid microparticles on said surface and on the basis of the average value of the impact angle of said solid microparticles on said surface.

Preferably, the selection of the values of r, K, λ e ε is carried out on the basis of the characteristics of said solid microparticles and of said fluid.

Alternatively, the value of said coefficients r, K, λ e ε is carried out on the basis of respective methods that comprise experimental tests.

In particular, the coefficients r and K can be derived through a method which comprises arranging a target element forming a surface and weighing said target element so that an initial weight of said target element is measured.

Preferably, the method for deriving r e K comprises, subsequently, conveying a flow of a fluid comprising solid microparticles towards said surface of said target element and weighing said target element, at predetermined time intervals from the beginning of the deposition process of said solid microparticles on said surface.

The method comprises deriving the mass values of said solid microparticles deposited on said surface after said predetermined time intervals and finally deriving the values of the coefficients r and K by applying said first differential equation or said second differential equation and using said values of mass of said microparticles.

According to an aspect of the invention, the method step of deriving a value of λ comprises arranging a target element forming a surface and conveying a flow of a fluid comprising solid microparticles towards said surface.

Preferably the method comprises, then, measuring the frequencies of the events of detachment of the mass of said microparticles from said surface which occur in a predetermined time interval.

Preferably, λ is calculated as the value minimizing the standard deviation between the measured frequencies of detachment events and the frequencies of detachment events obtained through the model according to said second differential equation.

An alternative method of deriving a value of λ comprises, like the previously described method, arranging a target element forming a surface and conveying a flow of a fluid comprising solid microparticles towards said surface.

Preferably, the alternative method comprises measuring the number of the events of detachment of said mass of said microparticles from said surface which occur in a predetermined time interval, and dividing said number of events of detachment by the number of times that said target element is weighted in said time interval.

According to said alternative method, λ is derived applying the following formula, in which n indicates the number of detachment events measured in said predetermined time interval:

$$\lambda = \frac{\text{n}}{\text{number of weighings}}$$

Preferably, ε is determined through a method which comprises arranging a target element forming a surface and conveying a flow of a fluid comprising solid microparticles towards said surface.

Preferably, the method comprises measuring, at predetermined time intervals from the beginning of the deposition process of said solid microparticles on said surface, the mass of microparticles deposited on said surface.

Preferably, the method comprises subsequently measuring a value of ε for each mass value measured at a specific instant, according to the following formula:

$$\varepsilon = \frac{m(t-1) - m(t)}{m(t-1)}$$

Preferably, the method comprises, finally, calculating an average value of ε from experimental tests, according to the following formula:

$$\varepsilon_{test} = \frac{\sum_{j=1}^{n} \varepsilon_{j^\circ\, detachment}}{n}$$

According to an alternative method for deriving a value of ε, ε is described by the probability density function defined by the following equation, where a and b are coefficients and β (a, b) is a distribution function.

$$\varepsilon = \frac{x^{(a-1)}(1-x)^{(b-1)}}{\beta\,(a,b)}$$

Preferably, $\beta\,(a, b)$ is a distribution function defined by the following equation:

$$\beta(a,b) = \frac{\Gamma(a)\Gamma(b)}{\Gamma(a)+\Gamma(b)}$$

said functions $\Gamma(a)$ and $\Gamma(b)$ being defined respectively by the following equations:

$$\Gamma(a) = \int_0^\infty x^{a-1} e^{-x}\, dx$$

$$\Gamma(b) = \int_0^\infty x^{b-1} e^{-x}\, dx$$

Preferably, x varies over the whole field of positive real numbers.

Preferably, a and b are numeric constants which can be considered as the probability that an event is favorable or unfavorable.

Preferably, $\varepsilon$ is derived by said probability density function, by allocating a value to the coefficients a and b.

Preferably, said coefficients a and b are determined through a method that comprises arranging a target element forming a surface subjected to a flow of a fluid comprising solid microparticles and measuring, at predetermined time intervals from the beginning of the deposition process of said solid microparticles on said surface, the mass of microparticles deposited on said surface.

Preferably, the method comprises deriving, for each mass value measured at an instant, a value of $\varepsilon$ according to the following formula, where m(t) is the mass measured at an instant of time and m(t-1) is the mass measured at a preceding instant of time:

$$\varepsilon = \frac{m(t-1) - m(t)}{m(t-1)}$$

Preferably, the method comprises fitting the values of $\varepsilon$ with said distribution function $\beta\,(a, b)$ to derive the coefficients a and b.

The present invention concerns as well a computer program that, when it is executed by a computer, carries out the steps of the method.

The present invention comprises as well a computer-readable data carrier having stored thereon the computer program.

Preferably, said data carrier has stored thereon a series of values of said coefficients r, K, $\lambda$ e $\varepsilon$.

Brief description of the drawings

The details of the invention will become more evident from the detailed description of a preferred embodiment of the method according to the invention, illustrated by way of example in the accompanying drawings, wherein:

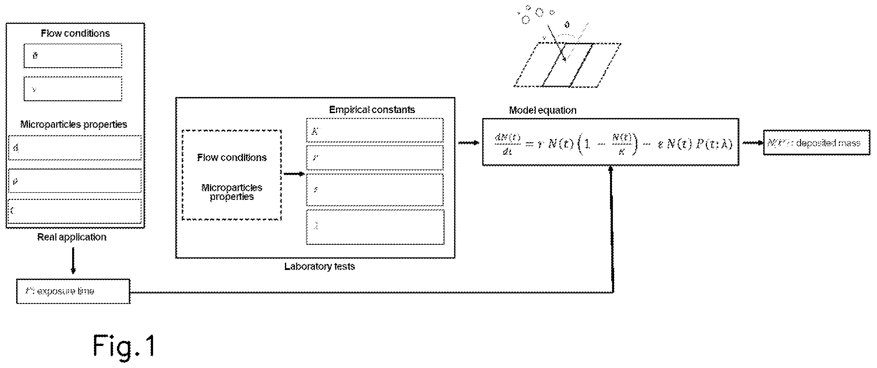

Figure 1 shows a block diagram illustrating the most important steps of the method according to the invention.

Figure 1 shows a diagram representing the experimental data of the mass of the solid microparticles accumulated on a surface over time, in predetermined experimental conditions, and a corresponding curve derived by the interpolation of the experimental data with the model utilized by the method according to the invention.

Figure 3 shows a further diagram representing the experimental data of the mass of the solid microparticles accumulated on a surface over time, in predetermined experimental conditions, and a curve representing the variation over time of the mass of the solid microparticles accumulated on a surface, derived by the interpolation of the experimental data according to the method object of the invention.

Figures 4a and 4b show respective diagrams relating to different experimental conditions, where each diagram represents the experimental data of a coefficient of an equation which describes the model and the curve resulting by the modeling of said coefficient through a probability density function;

Figures 4c and 4d show further diagrams relative to different experimental conditions, where each diagram represents the experimental data of a coefficient of an equation which describes the model and the curve resulting by the modeling of said coefficient through a probability density function;

Figures 5, 6 and 7 respectively show a perspective view, a front view and a top view of an experimental set for calculating specific coefficients of the equation which describes the method according to the present invention;

Figure 8 shows an enlarged detail of the experimental set of Figure 6.

<u>Best mode</u>

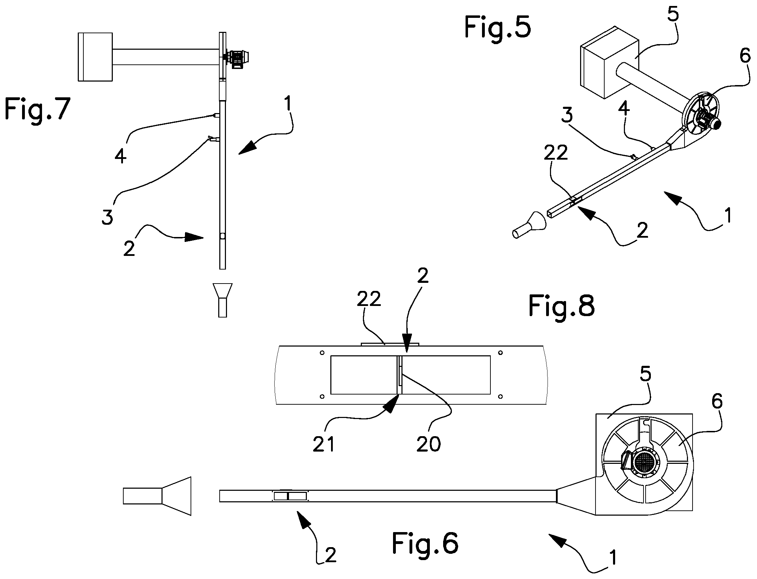

With particular reference to Figures 1-8, the method for estimating the accumulated mass of solid microparticles on a surface according to the present invention, wherein the surface is subjected to a flow of a fluid comprising the solid microparticles, is described hereinafter.

The fluid may be a gas or a liquid.

By way of example, the surface may be a surface of a heat exchanger, of a gas turbine, of a wind-powered turbine, of a photovoltaic panel or, in general, of a device or an apparatus or a plant subjected to a flow comprising solid microparticles which may adhere to the surface. Some industrial applications will be described hereinafter.

The method according to the present invention is a computer-implemented method.

Many experimental tests have been carried out to study the variation of the mass of the solid microparticles which deposit on a surface.

It has been observed that the variation of the accumulated mass of the solid microparticles on a surface over time may be described with a model defined according to the following differential equation:

$$\frac{dN(t)}{dt} = r\,N(t)\left(1 - \frac{N(t)}{K}\right)$$

$$(I)$$

where:

N (t) = the mass of the solid microparticles accumulated on the surface at an instant of time (t);

r = growth factor;

K = maximum limit value of the mass of the solid microparticles accumulated on the surface.

The equation describes a predictive model of the accumulation of the mass of the solid microparticles on a surface.

Coefficients r and K are related to the characteristics of the flow of the solid microparticles and to the characteristics of the solid microparticles and of the surface.

The characteristics of the flow of the solid microparticles comprise the average value of the impact angle $\vartheta$ of the solid microparticles on the surface and the average value of the impact speed v of the solid microparticles on the surface.

The characteristics of the solid microparticles comprise the density $\rho$ of the material the solid microparticles are made of, the concentration C of the solid microparticles in the flow, the diameter $d_i$ of the distribution of the solid microparticles.

The characteristics of the surface comprise the surface roughness Ra.

The coefficients r and K are therefore related to the characteristics of the microparticles such as, for instance, the density $\rho$, the diameter $d_i$ of the distribution, the concentration C. The values of the coefficients r and K are furthermore related to the characteristics of the flow, such as, for instance, the impact angle $\vartheta$ and the average speed v, and to the characteristics of the surface, such as, for instance, the surface roughness Ra.

The list of the characteristics to which the coefficients r and K are related is not exhaustive, because it is possible to envisage that said coefficients depend on further characteristics.

Preferably, the coefficients r and K are empirical, that is the values of such coefficients are determined through an experimental method related to the deposition of the microparticles on a surface, in predetermined flow conditions and with predetermined characteristics of the microparticles.

The experimental method for determining the values of the coefficients r and K comprises arranging a channel 1 and installing inside of it a target element 2 forming a surface 20. The surface 20 is characterized by a specific surface roughness Ra.

According to an embodiment, the target element 2 comprises an operative portion 21 which extends inside the channel 1, along a direction transversal to the channel 1. The surface 20 is defined on the operative portion 21.

The operative portion 21 is associated with a support portion 22 which is connected to an external surface of the channel 1.

The support portion 22 may be oriented to adjust the slope of the operative portion 21 with respect to the fluid which flows inside the channel 1. In this way, the desired impact angle $\vartheta$ may be set between the flow of fluid comprising the microparticles and the surface 20.

The experimental method also comprises associating with the channel 1 an injector 3 of microparticles which is configured for injecting inside the channel 1 the particles to be mixed to the flow of a fluid. Sensor means 4 are also associated with the channel 1 to measure predetermined parameters inside the channel 1, preferably temperature and/or humidity.

The method comprises weighing the target element 2 to determine its weight without any layer of microparticles.

The experimental method subsequently comprises producing a flow of a fluid and filtering the flow, through a filtering assembly 5, to remove any possible contaminant particles.

The flow of a fluid is conveyed inside the channel 1 towards the surface 20, for instance utilizing a fan member 6, and is mixed, through the path in the channel 1 towards the surface 20, with a predetermined quantity of microparticles provided by the injector 3. The flow of the fluid comprising the microparticles hits with a predetermined impact angle $\vartheta$ the surface 20 and the microparticles reach the surface with a predetermined average speed v.

The experimental method comprises weighing the target element 2 at predetermined time intervals from the beginning of the deposition process of said solid microparticles on the target surface.

Finally, the method comprises applying the equation (I) and deriving the values of the coefficient r and K, utilizing the measured mass values.

The growth of the deposited mass on a surface according to the above mentioned model is of the logistic type and is represented by a sigmoid curve, in which the mass of the microparticles tends to an asymptotic value, which represents the maximum limit value of the mass which may deposit on the surface. Such a value corresponds to the coefficient K.

The method for estimating the accumulated mass of solid microparticles on a surface comprises deriving, preferably by experimental tests, a value of the coefficient r and a value of the coefficient K. The coefficients r and K may be calculated through the experimental method described above.

Subsequently, the differential equation (I) is used for producing a curve of the variation of the accumulated mass of the microparticles on the surface over time.

Preferably the method comprises, subsequently, extrapolating from the curve the estimated value of the accumulated mass of the microparticles on the surface after a predetermined time interval from an instant in which the deposition process started.

It has been observed in the experimental tests that a detachment of a share of the microparticles deposited on the surface occurs.

The detachment may be a micro-detachment with occurs in a continuous way. The micro-detachment contributes to the balance that is established between the microparticles that reach the surface and the microparticles that leave. The equation (I) that describes the model already comprises such type of detaching.

Moreover, an additional type of detachment may occur, which is a macro-detachment. The macro-detachment occurs randomly, and it must be considered as a "catastrophic" event. The macro-detachment is an event that reduces the accumulated mass of microparticles on the surface and is modeled through a random fluctuation value added to the equation (I).

The equation (I) comprising the random fluctuation value relative to the macro-detachment becomes the following equation (II):

$$\frac{dN(t)}{dt} = r\,N(t)\left(1 - \frac{N(t)}{K}\right) - \varepsilon\,N(t)P(t;\,\lambda)$$

$$(II)$$

where:

N (t) = the mass of the solid microparticles accumulated on the surface at an instant of time (t);
r = growth factor;
K = maximum limit value of the mass of the solid microparticles accumulated on the surface;
$\varepsilon$ = share of the mass of the solid microparticles detached from the surface;
P (t; $\lambda$) = probability distribution which a phenomenon of detachment of the mass of the microparticles from the surface has to happen during the deposition.

The random fluctuation value is defined by $\varepsilon$, by the accumulated mass at an instant of time N (t) and by the probability distribution P (t; $\lambda$).

P (t, $\lambda$) is Poisson probability distribution which is defined by the following equation:

$$P\ (t;\ \lambda) = \left(\frac{\lambda^n}{n!}\right) e^{-\lambda}$$

(III)

where:

$\lambda$ = constant that indicates the average number of events in a time interval, in which the event is, in this instance, the number of detachment events of the mass of the solid microparticles in a predetermined time interval;
n = number of detachment events in the time interval
The Poisson probability distribution function P (t, $\lambda$) estimates the probability that detachment events of the mass from the surface occur within a given time interval, therefore it depends on $\lambda$ and is defined, for a given time interval, by the equation (III).

Preferably, the value of $\lambda$ is determined utilizing the experimental data on the frequency of the detachment events of the mass from the tested surface.

A method for measuring the frequency of the detachment events, for determining $\lambda$, involves utilizing the described experimental set to determine the coefficient r and K. In particular, the method comprises arranging the channel 1 comprising, inside of it, the target element 2 forming the surface 20 and weighing the target element 2 to obtain an initial weight.

The method subsequently comprises producing a flow of a fluid, filtering the flow, and conveying it towards the surface 20. The method subsequently comprises injecting, through the injector 3, a predetermined quantity of solid microparticles in the flow of the fluid before the fluid hits the surface 20.

Finally, the method comprises weighing the target element (2), at predetermined time intervals from the beginning of the deposition process of the solid microparticles, to measure the detachment events. More in detail, one calculates in iterative way the difference between the mass measured at an instant of time and the mass measured at a preceding instant of time, to detect the mass decrease and, therefore, a detachment event. The detachment events are measured within a predetermined observation time interval $\Delta$t.

The value of $\lambda$ is found making the best "fitting" of the experimental data, that is, it is the value which minimizes the standard deviation between the measured frequencies of detachment events and the frequencies of detachment events obtained through the model according to the equation (II).

Alternatively, the value of $\lambda$ is found by applying the following formula:

$$\lambda = \frac{n}{\text{number of weighings}}$$

n = number of detachment events in the given time interval $\Delta$t.

Practically, one measures the number of the events of detachment which occur in the given time interval $\Delta$t, and divides said number by the number of times that the target element 2 is weighted in time interval $\Delta$t.

With regard to the constant $\varepsilon$, which indicates the share of the mass which is detached from the surface over time, it has been observed in the experimental tests that the extent of the macro-detachment is variable over time and depends on the impact condition of the microparticles on the surface. From the experimental data, it emerged that the values of $\varepsilon$ tend to the value of 1 in the case of normal impact condition of the flow on the surface and for small values of kinetic energy. In the case of tangential impact condition of the flow on the surface, and for higher values of kinetic energy, the values of $\varepsilon$ tend to the value of 0.

For modeling the extent of the macro-detachment, the constant $\varepsilon$ is described by a probability density function, the values of which are comprised in the interval 0-1.

The probability density function is described by the following equation:

$$\varepsilon = \frac{x^{(a-1)}(1-x)^{(b-1)}}{\beta\ (a,b)}$$

(IV)

where:

a, b= coefficients

β (a, b) is the distribution function defined by the following equation:

$$\beta(a,b) = \frac{\Gamma(a)\Gamma(b)}{\Gamma(a)+\Gamma(b)}$$

(V)

where the functions Γ(a) e Γ(b) are defined by the following equations:

$$\Gamma(a) = \int_0^\infty x^{a-1} e^{-x}\, dx$$

(VI)

$$\Gamma(b) = \int_0^\infty x^{b-1} e^{-x}\, dx$$

(VI')

The functions Γ(a) and Γ(b) are integrals where the integration variable x varies on the whole field of positive real numbers.

The phenomenon of macro-detachment is therefore described as a phenomenon governed by the distribution function β (a, b), in which the coefficient a and b are located.

The coefficient a and b are numeric constants which can be considered as the probability that an event is favorable or unfavorable. In the case that a complete removal of the layer of the particles deposited on the surface occurs, the event is considered favorable, while in the case that the removal does not occur at all, the event is considered unfavorable.

The values of the coefficient a and b are derived utilizing the values of the mass deposited on the surface 20 of the target element 2 which have been measured in the experimental tests, preferably according to a method which makes use of the experimental set described above for determining r, K e λ. In particular, one arranges a target element 2 which forms a surface 20, weighs the target element and conveys a flow of a fluid comprising solid microparticles on the surface 20.

The method comprises weighing the target element 2, at predetermined time intervals from the beginning of the deposition process of the solid microparticles, and to compare, for the sampled time instants, the mass deposited at an instant (t) with the mass deposited at a preceding instant (t-1). The macro-detachment occurs if the mass at a time instant (t) is less than the mass at the instant (t-1).

Therefore, the values of ε are derived utilizing the following definition:

$$\varepsilon = \frac{m(t-1) - m(t)}{m(t-1)}$$

The values of ε obtained through experimental tests are fitted with a distribution function β (a, b) to derive the coefficients a and b.

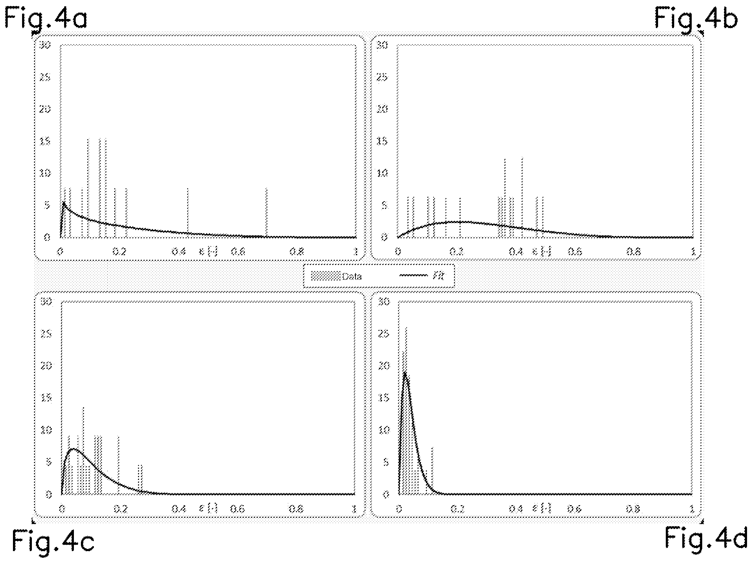

Figures 4a-4d show the values of ε measured in the experimental tests (see the discrete data) and the values derived by modeling ε with the distribution function β (a,b) (see the continuous curve). In particular, Figures 4a and 4b relate to normal conditions of impact of the flow on the surface, respectively for a low value of kinetic energy and for a high value of kinetic energy.

Figures 4c and 4d relate to tangential conditions of impact of the flow on the surface, respectively for a low value of kinetic energy and for a high value of kinetic energy.

As an alternative to modeling the constant ε using the distribution function β (a, b), it is possible to obtain an approximate value of ε by calculating the average of the values of ε obtained from the experimental tests carried out, as indicated below.

$$\varepsilon_{1° \, detachment} = \frac{m(t-1) - m(t)}{m(t-1)}$$

$$\varepsilon_{2° \, detachment} = \frac{m(t-1) - m(t)}{m(t-1)}$$

.....

$$\varepsilon_{n° \, detachment} = \frac{m(t-1) - m(t)}{m(t-1)}$$

$$\varepsilon_{test} = \frac{\sum_{j=1}^{n} \varepsilon_{j° \, detachment}}{n}$$

The method for estimating the mass deposited on a surface which takes into account the phenomenon of macro-detachment therefore involves calculating the coefficients r, K, $\lambda$, $\varepsilon$ and applying the differential equation (II) to construct an estimated curve of the variation of the accumulated mass of the microparticles on the surface over time.

According to a preferred embodiment of the method according to the present invention, the values of r, K, $\lambda$ and $\varepsilon$ are obtained directly from a memory of said electronic processor.

In particular, these values are selected from a dedicated archive in the memory and the selection is made considering one or more parameters, preferably on the basis of the average value of the impact speed of the solid microparticles on the surface and on the basis of the average value of the angle of impact of the solid microparticles on the surface. Furthermore, the above mentioned values are selected on the basis of the characteristics of the solid microparticles and of the fluid.

By way of example, a table is shown including the experimentally calculated values for the coefficients r, K, $\lambda$ and $\varepsilon$, at predetermined values of the average angle of impact $\vartheta$ of the microparticles on the surface and of the average speed v of the microparticles. These values are calculated using micrometric sand particles and a target surface made of stainless steel (AISI 316). Regarding $\varepsilon$, the values of a and b necessary to derive $\varepsilon$ by modeling with the function $\beta$ (a, b) are reported.

Table 1

| Slope θ [°] | Speed of the flow [m/s] | r [1/s] | K [g] | λ [-] | a [-] | b [b] |
|---|---|---|---|---|---|---|
| 15 ° | 25 | 1.27E-04 | 5.38E-04 | 0.0010 - 0.0016 | 1.39694 | 13.87150 |
| | 51 | 2.80E-04 | 4.19E-04 | 0.0015 - 0.0025 | 2.13720 | 52.68920 |
| 90° | 15 | 8.53E-05 | 0.0385 | 0.0003 - 0.0008 | 0.75637 | 3.10292 |
| | 34 | 1.87E-04 | 0.0137 | 0.0008 - 0.0011 | 1.31241 | 3.49213 |

Two examples of the experimental tests carried out are described below.

Experimental tests

Example 1

The experimental tests were performed using a flow of a fluid comprising solid microparticles that impact on a surface with an impact angle of about 90°. A flow of microparticles with surface-normal impact was then employed.

The further parameters that have been kept constant during the experimental tests are the following:

Air speed: 15 m/s
Air temperature: 25 °C
Relative humidity of the environment: 50%
Concentration of microparticles in the flow: 37 mg / m$^3$
Each test lasted for a time interval between 7 minutes and 65 hours.

Solid microparticles were used made of a powder material called "Arizona Road Dust" made up of about 75% (by mass) of silicon oxide. Prior to the execution of the tests, the powdered material was subjected to cooking for a time interval between 1 hour and 12 hours to completely remove the water contained in it.

A surface made of AISI 316 stainless steel was selected as the surface to be subjected to a flow of a fluid comprising the aforementioned powder material. The surface has a roughness of 1 $\mu$m.

In each test, having established the values of the above mentioned parameters (air temperature, relative humidity, air speed, concentration of the microparticles, angle of impact), the surface was subjected to a flow of a fluid comprising the solid microparticles for a time interval selected in the above specified interval. The mass of the powder material accumulated on the surface was measured, at predetermined time intervals, and the measured values were plotted.

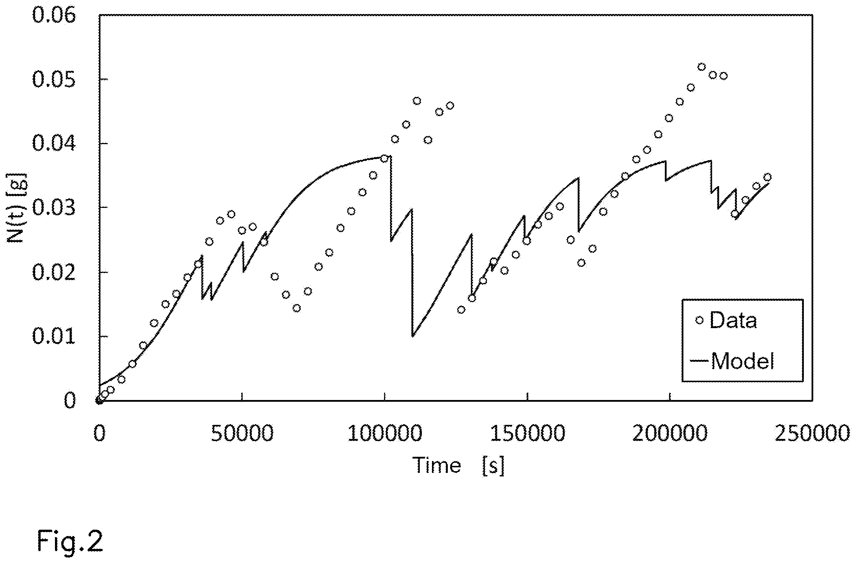

The graph shown in Figure 2 shows the trend of the mass of solid microparticles accumulated on the surface over time and, in particular, shows the mass of microparticles on the ordinate axis, with the gram unit of measurement, and on the abscissa axis the time, with unit of measure the second.

The coefficients r and K, which represent the growth and development of the mass layer on the surface of the target element, and the coefficients $\lambda$ and $\varepsilon$, which represent the effects of the detachment of part of the mass of microparticles deposited on the surface of the target element, were calculated experimentally. The experimental data were interpolated with the model described by equation (II), using the values of the coefficients calculated experimentally, and the continuous line curve represented in the graph in Figure 2 was obtained.

Example 2

Experimental tests were performed on the variation of the mass of microparticles deposited on a surface, at a speed of the microparticles of 51 m / s and with an impact angle of 15 °. This angle of impact is representative of a situation in which each particle hits the surface of the target element almost tangentially.

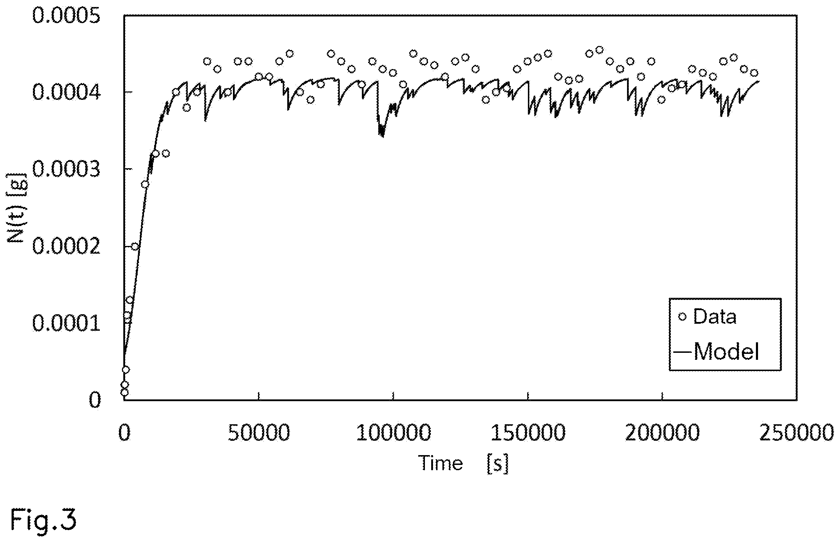

The method object of the present invention was applied, and the mass values obtained were reported in a graph representing the variation of the mass over time (see Figure 3). The graph shows mass on the ordinate axis, with unit of measure the gram, and time on the abscissa axis, with unit of measure the second.

The coefficients r and K, which represent the growth and development of the mass layer on the surface of the target element, and the coefficients $\lambda$ and $\varepsilon$, were experimentally calculated. The experimental data were interpolated with the model described by the equation (II), using the values of the coefficients calculated experimentally, and the continuous line curve represented in the graph in Figure 3 was obtained.

Also an object of the invention is a computer program which, if executed by an electronic computer, implements the steps of the method. The method can be implemented by a program in a design phase for new devices or equipment or in a maintenance or cleaning schedule phase.

For example, the method can be used in fluid dynamics or multi-physics programs for simulating the operation of a device or apparatus during design or in a verification phase.

The method can be used in programs for calculating both energy and thermo-economic performance of a plant.

Industrial applications

The method object of the present invention can be applied in numerous technical fields.

The method can be employed to predict the accumulated mass of solid microparticles on a surface of a wind or gas turbine, particularly on the surface of a turbine blade. Changes in the characteristics of the surface of the blades of a turbine, such as the shape of the profiles or the surface roughness, cause a loss of turbine performance and, therefore, it is necessary to periodically remove the microparticles adhering to the surface.

The method is also applicable to fans for the extraction or processing of contaminating gases that are used, for example, in paper mills, mines, tunnels, in the steel industry, etc. On these fans there is often the accumulation of solid microparticles and it is important to plan maintenance operations.

A field of application of the method is that of photovoltaic and thermal panels, as the deposit of solid microparticles on the surface of the panels leads to a reduction in production capacity. In the case of photovoltaic panels, the accumulated mass of solid microparticles on the transparent surface of the panels reduces the amount of useful radiation, considered a predetermined irradiation condition, with a worsening of production capacity. The forecast of the mass accumulation of microparticles over time allows one to plan cleaning operations as well as to predict the decrease in the amount of energy produced over time. The planning of cleaning operations is especially relevant in areas that are difficult to reach. An application of the predictive method can be in space missions considering the extensive use of photovoltaic panels to recharge the batteries of the vehicles used.

A further possible application of the method is in the field of heat exchangers, to calculate the adhesion of microparticles on the exchange surfaces of the heat exchangers. The deposition of a layer of microparticles on these surfaces reduces the efficiency of the heat exchange and, moreover, may cause pressure drops due to a reduction in the fluid passage sections. In this case, the application of the method is useful both for planning the cleaning interventions and in the design phase of the exchanger since the geometry and sizing of the exchanger are established considering the accumulation phenomenon and the consequences of the accumulation on operation.

The method can be applied to predict the deposition of microparticles on electronic components and this is advantageous as the accumulation of microparticles can alter the ability to dissipate heat or the insulation, or the ability to transmit or receive signals of different types.

The method according to the present invention achieves the object of making a prediction of the accumulated mass of solid microparticles on a surface over time. In particular, the method is based on a statistical model that allows one to predict the accumulation of solid microparticles on a surface over time, for predetermined operating conditions. The fact that the model is statistical is advantageous compared to the use of a model based on the interpolation of experimental data obtained with experimental tests that aim to simulate real conditions, as it is a generic model.

The method can in fact be applied to any situation in which a surface is subjected to a flow including solid microparticles since the application conditions, such as, for example, the characteristics of the flow, of the microparticles and of the surface, are considered through the choice of the coefficients of the differential equation that describes the model on which the method is based. Therefore, the method turns out to be versatile.

An aspect to consider is also that the predictive method object of the invention allows to study the phenomenon of deposition of microparticles on a surface, therefore, it can be useful in the design or verification phase of a device or apparatus or a plant. More specifically, the definition of characteristics such as shape and size can be carried out considering the consequences of the accumulation of microparticles which is estimated with the method.

Where the technical features mentioned in each claim are followed by reference signs, these reference signs have been included for the sole purpose of increasing the understanding of the claims and consequently they have no limiting value on the purpose of each element identified by way example by such reference signs.

**Claims**

1. A computer-implemented method for estimating the accumulated mass of solid microparticles on a surface, said surface being subjected to a flow of a fluid comprising said solid microparticles, wherein the variation of the mass of the solid microparticles on said surface over time is described with a model defined according to the following differential equation II:

$$\frac{dN(t)}{dt} = r\,N(t)\left(1 - \frac{N(t)}{K}\right) - \varepsilon\,N(t)P(t;\,\lambda)$$

   where:

   N (t) = mass of the solid microparticles accumulated on said surface at an instant of time t;
   r = growth factor;
   K = maximum limit value of the accumulated mass of said solid microparticles on said surface; r and K being coefficients correlated to predetermined characteristics of said flow of a fluid comprising said solid microparticles and based on predetermined characteristics of said solid microparticles and of said surface;
   ε= share of the mass of the solid microparticles detached from said surface, ε having a value in the range between 0 and 1;
   λ =indicates the average number of detachment events of the mass of the solid microparticles in a predetermined time interval;
   P (t, λ)= Poisson probability distribution which has a phenomenon of detachment of said mass of microparticles from said surface to happen in said predetermined time interval;
   said method including the following steps:

   a. deriving a value of said coefficient r;
   b. deriving a value of said coefficient K;
   c. deriving a value of λ;
   d. deriving a value of ε;
   e. determining a curve of the variation of the accumulated mass of said microparticles on said surface as a function of time by applying said differential equation II.

2. A method as in claim 1, wherein said coefficients r and K are determined using the following method:

a. arranging a target element (2) forming a surface (20);

b. weighing said target element (2) so that an initial weight of said target element (2) is measured;

c. conveying a flow of a fluid comprising solid microparticles towards said surface (20) of said target element (2);

d. weighing said target element (2), at predetermined time intervals from the beginning of the deposition process of said solid microparticles on said surface (20);

e. calculating the mass values of said solid microparticles deposited on said surface (20) after said predetermined time intervals and

f. calculating the values of the coefficients r and K by applying said differential equation II and using said values of mass of said microparticles.

3. A method as in any one of the preceding claims, wherein said characteristics of said flow comprise the average value of the angle of impact ($\vartheta$) of said solid microparticles on said surface and the average value of the impact speed (v) of said solid microparticles on said surface.

4. A method as in any one of the preceding claims, wherein said characteristics of said solid microparticles comprise the concentration of said solid microparticles (C) in said flow of said fluid, the diameter of the distribution ($d_i$) of said microparticles in said flow and the density ($\rho$) of the material the solid microparticles are made of.

5. A method as in any one of the preceding claims, wherein said characteristics of said surface comprise the surface roughness (Ra).

6. A method as in claim 1, wherein said step (c.) of deriving a value of $\lambda$ comprises the following steps:

c1. arranging a target element (2) forming a surface (20);

c2. conveying a flow of a fluid comprising solid microparticles towards said surface (20);

c3. measuring the frequencies of the events of detachment of the mass of said microparticles from said surface (20) which occur in a predetermined time interval ($\Delta t$);

c4. calculating the standard deviation between said measured frequencies of detachment events and the frequencies of detachment events obtained through the model according to said equation II;

c5. calculating $\lambda$ as the value minimizing said standard deviation.

7. A method as in claim 1, wherein said step (c.) of deriving a value of $\lambda$ comprises the following steps:

c1. arranging a target element (2) forming a surface (20);

c2. conveying a flow of a fluid comprising solid microparticles towards said surface (20);

c3. measuring the number of detachment events of said mass of said microparticles from said surface (20) which occur in a predetermined time interval ($\Delta t$) and dividing said number of detachment events by the number of times that said target element (2) is weighted in said time interval ($\Delta t$), as defined by the following formula:

$$\lambda = \frac{n}{\text{number of weighings}}$$

where:

n= number of detachment events measured in said predetermined time interval ($\Delta t$)

8. A method according to claim 1, 6 or 7, wherein $\varepsilon$ is described by the probability density function described by the following equation IV:

$$\varepsilon = \frac{x^{(a-1)}(1-x)^{(b-1)}}{\beta(a,b)}$$

where:

a, b= coefficients

$\beta$ (a, b) is the distribution function defined by the following equation V:

$$\beta(a,b)= \frac{\Gamma(a)\Gamma(b)}{\Gamma(a)+\Gamma(b)}$$

said functions $\Gamma(a)$ and $\Gamma(b)$ being defined respectively by the following equations VI, VI':

$$\Gamma(a) = \int_0^\infty x^{a-1} e^{-x}\, dx$$

$$\Gamma(b) = \int_0^\infty x^{b-1} e^{-x}\, dx$$

where x varies over the whole field of positive real numbers.

9. A method according to claim 8, wherein said coefficients a and b are determined through the following steps:

a. arranging a target element (2) forming a surface (20) subjected to a flow of a fluid comprising solid microparticles;
b. measuring the mass of microparticles deposited on said surface (20) at predetermined time intervals from the beginning of the deposition process of said solid microparticles on said surface (20);
c. calculating a value of $\varepsilon$ for each mass value measured at an instant (t), according to the following formula:

$$\varepsilon = \frac{m(t-1) - m(t)}{m(t-1)}$$

where

m(t)= mass measured at an instant of time (t);
m(t-1)= mass measured at a previous instant (t-1);

d. fitting the values of $\varepsilon$ with said distribution function $\beta$ (a, b) to calculate the coefficients a and b.

10. A method according to claim 1, 6 or 7, wherein $\varepsilon$ is determined through the following steps:

a. arranging a target element (2) forming a surface (20) subjected to a flow of a fluid comprising solid microparticles;
b. measuring the mass of microparticles deposited on said surface (20) at predetermined time intervals from the beginning of the deposition process of said solid microparticles on said surface (20);
c. calculating a value of $\varepsilon$ for each mass value measured at an instant (t), according to the following formula:

$$\varepsilon = \frac{m(t-1) - m(t)}{m(t-1)}$$

d. calculating an average value of $\varepsilon$ as indicated by the following formula:

$$\varepsilon_{test} = \frac{\sum_{j=1}^n \varepsilon_{j°\ detachment}}{n}$$

11. A method according to claim 1, wherein it provides for selecting the values of r, K, $\lambda$ and $\varepsilon$ from a memory of a computer, on the basis of a predetermined average value of the impact speed (v) of said solid microparticles on said surface, on the basis of an average value of the impact angle ($\vartheta$) of said solid microparticles on said surface and on the basis of predetermined characteristics of said solid microparticles and of said fluid.

12. A computer program comprising instructions which, when the program is executed by a computer, cause the computer to perform the steps of the method according to claim 1.

13. A memory readable by a computer in which the program according to claim 12 is loaded, said memory comprising a series of values of said coefficients r, K, $\lambda$ and $\varepsilon$,

**Patentansprüche**

1. Computerimplementiertes Verfahren zum Schätzen der akkumulierten Masse von festen Mikropartikeln auf einer Oberfläche, wobei die Oberfläche einer Strömung eines Fluids umfassend die festen Mikropartikel ausgesetzt ist, wobei die Variation der Masse der festen Mikropartikel auf der Oberfläche über die Zeit mit einem Modell beschrieben wird, das gemäß der folgenden Differentialgleichung II definiert ist:

$$\frac{dN(t)}{dt} = r\, N(t)\left(1 - \frac{N(t)}{K}\right) - \varepsilon\, N(t)P(t;\ \lambda)$$

wobei:

N (t) = Masse der festen Mikropartikel, die sich zu einem Zeitpunkt t auf der Oberfläche angesammelt haben;
r = Wachstumsfaktor;
K = maximaler Grenzwert der angesammelten Masse der festen Mikropartikel auf der Oberfläche; wobei r und K Koeffizienten sind, die mit vorbestimmten Eigenschaften der Strömung eines Fluids umfassend die festen Mikropartikel korreliert sind und auf vorbestimmten Eigenschaften der festen Mikropartikel und der Oberfläche basieren;
$\varepsilon$ = Anteil der Masse der festen Mikropartikel, die von der Oberfläche abgelöst werden, wobei $\varepsilon$ einen Wert in dem Bereich zwischen 0 und 1 hat;
$\lambda$ = die durchschnittliche Anzahl von Ablöseereignissen der Masse der festen Mikropartikel in einem vorbestimmten Zeitintervall angibt;
P (t, $\lambda$) = Poisson-Wahrscheinlichkeitsverteilung, die ein Phänomen des Ablösens der Masse der Mikropartikel von der Oberfläche in dem vorbestimmten Zeitintervall aufweist;
wobei das Verfahren die folgenden Schritte enthält:

a. Ableiten eines Wertes des Koeffizienten r;
b. Ableiten eines Wertes des Koeffizienten K;
c. Ableiten eines Wertes von $\lambda$;
d. Ableiten eines Wertes von $\varepsilon$;
e. Bestimmen einer Kurve der Variation der akkumulierten Masse der Mikropartikel auf der Oberfläche als Funktion der Zeit durch Anwenden der Differentialgleichung II.

2. Verfahren nach Anspruch 1, wobei die Koeffizienten r und K unter Verwendung des folgenden Verfahrens bestimmt werden:

a. Anordnen eines Zielelements (2), das eine Oberfläche (20) bildet;
b. Wiegen des Zielelements (2), sodass ein Anfangsgewicht des Zielelements (2) gemessen wird;
c. Fördern einer Strömung eines Fluids umfassend feste Mikropartikel in Richtung der Oberfläche (20) des Zielelements (2);
d. Wiegen des Zielelements (2) in vorbestimmten Zeitintervallen ab dem Beginn des Abscheidungsprozesses der festen Mikropartikel auf der Oberfläche (20);
e. Berechnen der Massenwerte der auf der Oberfläche (20) abgeschiedenen festen Mikropartikel nach den vorbestimmten Zeitintervallen und
f. Berechnen der Werte der Koeffizienten r und K durch Anwenden der Differentialgleichung II und unter Verwendung der Massenwerte der Mikropartikel.

3. Verfahren nach einem der vorstehenden Ansprüche, wobei die Eigenschaften der Strömung den Durchschnittswert des Auftreffwinkels ($\vartheta$) der festen Mikropartikel auf der Oberfläche und den Durchschnittswert der Auftreffgeschwindigkeit (v) der festen Mikropartikel auf der Oberfläche umfassen.

4. Verfahren nach einem der vorstehenden Ansprüche, wobei die Eigenschaften der festen Mikropartikel die Konzentration der festen Mikropartikel (C) in der Strömung des Fluids, den Durchmesser der Verteilung ($d_i$) der Mikropartikel in der Strömung und die Dichte ($\rho$) des Materials, aus dem die festen Mikropartikel bestehen, umfassen.

5. Verfahren nach einem der vorstehenden Ansprüche, wobei die Eigenschaften der Oberfläche die Oberflächenrauheit (Ra) umfassen.

6. Verfahren nach Anspruch 1, wobei der Schritt (c.) des Ableitens eines Wertes von $\lambda$ die folgenden Schritte umfasst:

   c1. Anordnen eines Zielelements (2), das eine Oberfläche (20) bildet;
   c2. Fördern einer Strömung eines Fluids umfassend feste Mikropartikel in Richtung der Oberfläche (20);
   c3. Messen der Frequenzen der Ablösungsereignisse der Masse der Mikropartikel von der Oberfläche (20), die in einem vorbestimmten Zeitintervall ($\Delta t$) auftreten;
   c4. Berechnen der Standardabweichung zwischen den gemessenen Frequenzen der Ablöseereignisse und den Frequenzen der Ablöseereignisse, die durch das Modell gemäß der Gleichung II erhalten werden;
   c5. Berechnen von $\lambda$ als den Wert, der die Standardabweichung minimiert.

7. Verfahren nach Anspruch 1, wobei der Schritt (c.) des Ableitens eines Wertes von $\lambda$ die folgenden Schritte umfasst:

   c1. Anordnen eines Zielelements (2), das eine Oberfläche (20) bildet;
   c2. Fördern einer Strömung eines Fluids umfassend feste Mikropartikel in Richtung der Oberfläche (20);
   c3. Messen der Anzahl von Ablöseereignissen der Masse der Mikropartikel von der Oberfläche (20), die in einem vorbestimmten Zeitintervall ($\Delta t$) auftreten, und Dividieren der Anzahl von Ablöseereignissen durch die Anzahl der Wägungen des Zielelements (2) in dem Zeitintervall ($\Delta t$), wie durch die folgende Formel definiert:

$$\lambda = \frac{n}{\text{Anzahl der Wägungen}}$$

   wobei:
   n= Anzahl der Ablösungsereignisse, die in dem vorbestimmten Zeitintervall ($\Delta t$) gemessen werden

8. Verfahren nach Anspruch 1, 6 oder 7, wobei $\varepsilon$ durch die Wahrscheinlichkeitsdichtefunktion beschrieben wird, die durch die folgende Gleichung IV beschrieben ist:

$$\varepsilon = \frac{x^{(a-1)}(1-x)^{(b-1)}}{\beta(a,b)}$$

   wobei:

   a, b= Koeffizienten
   $\beta(a, b)$ die Verteilungsfunktion ist, die durch die folgende Gleichung V definiert ist:

$$\beta(a,b) = \frac{\Gamma(a)\Gamma(b)}{\Gamma(a)+\Gamma(b)}$$

   wobei die Funktionen $\Gamma(a)$ und $\Gamma(b)$ jeweils durch die folgenden Gleichungen VI, VI' definiert sind:

$$\Gamma(a) = \int_0^\infty x^{a-1}e^{-x}\,dx$$

$$\Gamma(b) = \int_0^\infty x^{b-1}e^{-x}\,dx$$

   wobei x über das gesamte Feld der positiven reellen Zahlen variiert.

9. Verfahren nach Anspruch 8, wobei die Koeffizienten a und b durch die folgenden Schritte bestimmt werden:

a. Anordnen eines Zielelements (2), das eine Oberfläche (20) bildet, die einer Strömung eines Fluids umfassend feste Mikropartikel ausgesetzt ist;
b. Messen der Masse der auf der Oberfläche (20) abgeschiedenen Mikropartikel in vorbestimmten Zeitintervallen ab dem Beginn des Abscheidungsprozesses der festen Mikropartikel auf der Oberfläche (20);
c. Berechnen eines Wertes von ε für jeden zu einem Zeitpunkt (t) gemessenen Massenwert nach der folgenden Formel:

$$\varepsilon = \frac{m(t-1) - m(t)}{m(t-1)}$$

wobei

m(t)= zu einem Zeitpunkt (t) gemessene Masse;
m(t-1)= zu einem früheren Zeitpunkt (t-1) gemessene Masse;

d. Anpassen der Werte von ε an die Verteilungsfunktion β (a, b), um die Koeffizienten a und b zu berechnen.

**10.** Verfahren nach Anspruch 1, 6 oder 7, wobei ε durch die folgenden Schritte bestimmt wird:

a. Anordnen eines Zielelements (2), das eine Oberfläche (20) bildet, die einer Strömung eines Fluids umfassend feste Mikropartikel ausgesetzt ist;
b. Messen der Masse der auf der Oberfläche (20) abgeschiedenen Mikropartikel in vorbestimmten Zeitintervallen ab dem Beginn des Abscheidungsprozesses der festen Mikropartikel auf der Oberfläche (20);
c. Berechnen eines Wertes von ε für jeden zu einem Zeitpunkt (t) gemessenen Massenwert nach der folgenden Formel:

$$\varepsilon = \frac{m(t-1) - m(t)}{m(t-1)}$$

d. Berechnen eines Durchschnittswertes von ε, wie durch die folgende Formel angegeben:

$$\varepsilon Test = \frac{\sum_{j=1}^{n} \varepsilon_j \alpha Abl\ddot{o}sung}{n}$$

**11.** Verfahren nach Anspruch 1, wobei es das Auswählen der Werte von r, K, λ und ε aus einem Speicher eines Computers auf der Grundlage eines vorbestimmten Durchschnittswerts der Auftreffgeschwindigkeit (v) der festen Mikropartikel auf der Oberfläche, auf der Grundlage eines Durchschnittswerts des Auftreffwinkels (ϑ) der festen Mikropartikel auf der Oberfläche und auf der Grundlage vorbestimmter Eigenschaften der festen Mikropartikel und des Fluids bereitstellt.

**12.** Computerprogramm umfassend Anweisungen, die bei Ausführung des Programms durch einen Computer den Computer zum Durchführen der Verfahrensschritte nach Anspruch 1 veranlassen.

**13.** Von einem Computer lesbarer Speicher, in den das Programm nach Anspruch 12 geladen ist, wobei der Speicher eine Reihe von Werten der Koeffizienten r, K, λ und ε umfasst.

**Revendications**

**1.** Procédé, mis en œuvre par ordinateur, d'estimation de la masse accumulée de microparticules solides sur une surface, ladite surface étant soumise à un écoulement d'un fluide comprenant lesdites microparticules solides, dans lequel la variation de la masse des microparticules solides sur ladite surface au fil du temps est décrite avec un modèle défini selon l'équation différentielle II suivante :

$$\frac{dN(t)}{dt} = r\,N(t)\left(1 - \frac{N(t)}{K}\right) - \varepsilon\,N(t)P(t;\,\lambda)$$

où :

N (t) = masse des microparticules solides accumulées sur ladite surface à un instant t ;

r = facteur de croissance ;

K = valeur limite maximale de la masse accumulée desdites microparticules solides sur ladite surface ; r et K étant des coefficients corrélés à des caractéristiques prédéterminées dudit écoulement d'un fluide comprenant lesdites microparticules solides et basés sur des caractéristiques prédéterminées desdites microparticules solides et de ladite surface ;

$\varepsilon$ = part de la masse des microparticules solides détachées de ladite surface, $\varepsilon$ ayant une valeur se situant dans la plage entre 0 et 1 ;

$\lambda$ = indique le nombre moyen d'événements de détachement de la masse des microparticules solides dans un intervalle de temps prédéterminé ;

P (t, $\lambda$) = distribution de probabilité de Poisson selon laquelle un phénomène de détachement de ladite masse de microparticules de ladite surface doit se produire dans ledit intervalle de temps prédéterminé ;

le procédé comportant les étapes suivantes :

    a. dérivation d'une valeur dudit coefficient r ;
    b. dérivation d'une valeur dudit coefficient K ;
    c. dérivation d'une valeur de $\lambda$ ;
    d. dérivation d'une valeur de $\varepsilon$ ;
    e. détermination d'une courbe de la variation de la masse accumulée desdites microparticules sur ladite surface en fonction du temps en appliquant ladite équation différentielle II.

2. Procédé selon la revendication 1, dans lequel lesdits coefficients r et K sont déterminés en utilisant le procédé suivant :

    a. disposition d'un élément cible (2) formant une surface (20) ;
    b. pesage dudit élément cible (2) de sorte qu'un poids initial dudit élément cible (2) soit mesuré ;
    c. acheminement d'un écoulement d'un fluide comprenant des microparticules solides vers ladite surface (20) dudit élément cible (2) ;
    d. pesage dudit élément cible (2), à des intervalles de temps prédéterminés à partir du début du processus de dépôt desdites microparticules solides sur ladite surface (20) ;
    e. calcul des valeurs de masse desdites microparticules solides déposées sur ladite surface (20) après lesdits intervalles de temps prédéterminés et
    f. calcul des valeurs des coefficients r et K en appliquant ladite équation différentielle II et en utilisant lesdites valeurs de masse desdites microparticules.

3. Procédé selon l'une quelconque des revendications précédentes, dans lequel lesdites caractéristiques dudit écoulement comprennent la valeur moyenne de l'angle d'impact ($\vartheta$) desdites microparticules solides sur ladite surface et la valeur moyenne de la vitesse d'impact (v) desdites microparticules solides sur ladite surface.

4. Procédé selon l'une quelconque des revendications précédentes, dans lequel lesdites caractéristiques desdites microparticules solides comprennent la concentration desdites microparticules solides (C) dans ledit écoulement dudit fluide, le diamètre de la distribution ($d_i$) desdites microparticules dans ledit écoulement et la densité ($\rho$) du matériau dont les microparticules solides sont constituées.

5. Procédé selon l'une quelconque des revendications précédentes, dans lequel lesdites caractéristiques de ladite surface comprennent la rugosité de surface (Ra).

6. Procédé selon la revendication 1, dans lequel ladite étape (c.) de dérivation d'une valeur de $\lambda$ comprend les étapes suivantes :

    c1. disposition d'un élément cible (2) formant une surface (20) ;
    c2. acheminement d'un écoulement d'un fluide comprenant des microparticules solides vers ladite surface (20) ;
    c3. mesure des fréquences des événements de détachement de la masse desdites microparticules de ladite surface (20) qui se produisent dans un intervalle de temps prédéterminé ($\Delta$t) ;

c4. calcul de l'écart type entre lesdites fréquences mesurées d'événements de détachement et les fréquences d'événements de détachement obtenues grâce au modèle selon ladite équation II ;

c5. calcul de $\lambda$ en tant que valeur minimisant ledit écart type.

**7.** Procédé selon la revendication 1, dans lequel ladite étape (c.) de dérivation d'une valeur de $\lambda$ comprend les étapes suivantes :

c1. disposition d'un élément cible (2) formant une surface (20) ;

c2. acheminement d'un écoulement d'un fluide comprenant des microparticules solides vers ladite surface (20) ;

c3. mesure du nombre d'événements de détachement de ladite masse desdites microparticules de ladite surface (20) qui se produisent dans un intervalle de temps prédéterminé ($\Delta$t) et division dudit nombre d'événements de détachement par le nombre de fois où ledit élément cible (2) est pesé dans ledit intervalle de temps ($\Delta$t), tel que défini par la formule suivante :

$$\lambda = \frac{n}{\text{nombre de pesages}}$$

où :

n= nombre d'événements de détachement mesuré dans ledit intervalle de temps prédéterminé ($\Delta$t)

**8.** Procédé selon la revendication 1, 6 ou 7, dans lequel $\varepsilon$ est décrit par la fonction de densité de probabilité décrite par l'équation IV suivante :

$$\varepsilon = \frac{x^{(a-1)}(1-x)^{(b-1)}}{\beta(a,b)}$$

où :

a, b= coefficients

$\beta$ (a, b) est la fonction de distribution définie par l'équation V suivante :

$$\beta(a,b) = \frac{\Gamma(a)\Gamma(b)}{\Gamma(a)+\Gamma(b)}$$

lesdites fonctions $\Gamma(a)$ et $\Gamma(b)$ étant définies respectivement par les équations VI, VI' suivantes :

$$\Gamma(a) = \int_0^\infty x^{a-1}e^{-x}\,dx$$

$$\Gamma(b) = \int_0^\infty x^{b-1}e^{-x}\,dx$$

où x varie sur l'ensemble du champ des nombres réels positifs.

**9.** Procédé selon la revendication 8, dans lequel lesdits coefficients a et b sont déterminés par les étapes suivantes :

a. disposition d'un élément cible (2) formant une surface (20) soumise à un écoulement d'un fluide comprenant des microparticules solides ;

b. mesure de la masse de microparticules déposées sur ladite surface (20) à des intervalles de temps prédéterminés à partir du début du processus de dépôt desdites microparticules solides sur ladite surface (20) ;

c. calcul d'une valeur de $\varepsilon$ pour chaque valeur de masse mesurée à un instant (t), selon la formule suivante :

$$\varepsilon = \frac{m(t-1)-m(t)}{m(t-1)}$$

où

m(t)= masse mesurée à un instant (t) ;
m(t-1)= masse mesurée à un instant précédent (t-1) ;

d. ajustement des valeurs de $\varepsilon$ avec ladite fonction de distribution $\beta$ (a, b) pour calculer les coefficients a et b.

10. Procédé selon la revendication 1, 6 ou 7, dans lequel $\varepsilon$ est déterminé par les étapes suivantes :

a. disposition d'un élément cible (2) formant une surface (20) soumise à un écoulement d'un fluide comprenant des microparticules solides ;
b. mesure de la masse de microparticules déposées sur ladite surface (20) à des intervalles de temps prédéterminés à partir du début du processus de dépôt desdites microparticules solides sur ladite surface (20) ;
c. calcul d'une valeur de $\varepsilon$ pour chaque valeur de masse mesurée à un instant (t), selon la formule suivante :

$$\varepsilon = \frac{m(t-1) - m(t)}{m(t-1)}$$

d. calcul d'une valeur moyenne de $\varepsilon$ comme indiqué par la formule suivante :

$$\varepsilon_{test} = \frac{\sum_{j=1}^{n} \varepsilon_{j\infty} d\acute{e}tachement}{n}$$

11. Procédé selon la revendication 1, dans lequel est prévue la sélection des valeurs de r, K, $\lambda$ et $\varepsilon$ à partir d'une mémoire d'un ordinateur, sur la base d'une valeur moyenne prédéterminée de la vitesse d'impact (v) desdites microparticules solides sur ladite surface, sur la base d'une valeur moyenne de l'angle d'impact ($\vartheta$) desdites microparticules solides sur ladite surface et sur la base de caractéristiques prédéterminées desdites microparticules solides et dudit fluide.

12. Programme informatique comprenant des instructions qui, lorsque le programme est exécuté par un ordinateur, amènent l'ordinateur à effectuer les étapes du procédé selon la revendication 1.

13. Mémoire lisible par un ordinateur dans laquelle le programme selon la revendication 12 est chargé, ladite mémoire comprenant une série de valeurs desdits coefficients r, K, $\lambda$ et $\varepsilon$.

Fig.1

Fig.2

Fig.3

Fig.4a

Fig.4b

Fig.4c

Fig.4d

Fig.7

Fig.5

Fig.8

Fig.6

EP 4 205 032 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3139038 A1